# EUROPEAN PATENT APPLICATION

(11) **EP 4 509 933 A1**
(43) Date of publication of application: **19.02.2025**
(21) Application number: 23382851.6
(22) Date of filing: 16.08.2023
(51) Int. Cl.: G05B 15/02

(54) **SYSTEM AND METHOD FOR EVALUATING ACCURACY OF OPERATION OF PLURALITY OF SENSORS OF CLIMATE CONTROL UNIT IN PREMISES**

(71) Applicant: Carrier Corporation, Palm Beach Gardens, FL 33418 (US)
(72) Inventor: VAJAPEYAYAJULA, Venkateswara Rao, Hyderabad 500081 (IN); JUNNURI, Venkata Satya Sai Ramesh Kumar, Konaseema 533201 (IN); BUDDUNA, Satwick, Hyderabad 500081 (IN); FLORENTINO, Blanca, Majadahonda (ES)
(74) Representative: Dehns

(57) **Abstract**

A system (100) and method for evaluating accuracy of operation of sensors (102) of a climate control unit (120) in a premises (150) are disclosed. The method includes receiving, from a plurality of sensors (102), output signals indicative of a climate within the premises (150). The method further includes determining one or more climate parameters within the premises (150) based on the received output signals. The method further includes receiving one or more historical climate parameters. The method further includes generating a virtual model configured to generate one or more virtual climate parameters. The method further includes determining, based on comparison of the climate parameters and the virtual climate parameters, a range of variation for the climate parameters. The method further includes determining an accuracy of operation of the plurality of sensors (102) based on comparison of variation between the climate parameters and the virtual climate parameters with the determined range of variation for the climate parameters.

## Description

### TECHNICAL FIELD

This invention relates to evaluating operation of climate control unit in a premises, and more particularly, to evaluating accuracy of operation of one or more sensors monitoring a climate within the premises.

### BACKGROUND

Climate within a premises may refer to any or a combination of comfort parameters for persons within the premises, such as, without limitations, temperature, relative humidity, levels of carbon dioxide, levels of particulate matter, etc. A goal of a competent climate control unit may be to operate various climate control apparatuses within the premises to provide optimal and/or preferred climate conditions to persons within the premises. Generally, the climate control unit relies on information relayed through sensors to determine a current condition of climate at various locations within the premises. Based on deviation of current climate conditions from the preferred climate conditions, the climate control unit may operate the different climate control apparatuses to rectify or minimise the deviation. As a result, for the optimal functioning of the climate control unit, it is important that the sensors provide accurate information. Due to the vast number of sensors generally deployed in premises, particularly, large premises, it may be cumbersome and inefficient to individually check functioning of each of the sensors. However, a malfunction in even a single sensor may lead to inefficient or errant operation of the climate control unit, leading to increased costs of operation of the climate control unit.

### SUMMARY

Disclosed herein is a method for evaluating accuracy of operation of sensors of a climate control unit in a premises. The method includes receiving, by a computing device, from a plurality of sensors communicably coupled to it, output signals indicative of a climate within the premises. The method further includes determining, by the computing device, one or more climate parameters within the premises based on the received output signals. The method further includes receiving, by the computing device, from a database communicably coupled to it, one or more historical climate parameters within the premises. The method further includes generating, by the computing device, through a learning engine communicably coupled to it, based on the historical climate parameters, a virtual model of the plurality of sensors. The virtual model is configured to generate one or more virtual climate parameters pertaining to the climate within the premises. The method further includes determining, by the computing device, through the learning engine, based on a comparison of the climate parameters and the virtual climate parameters, a range of variation for the climate parameters. The method further includes determining, by the computing device, an accuracy of operation of a sensor of the plurality of sensors based on comparison of a variation between the climate parameters determined from the output signals from the sensor and the virtual climate parameters, with the determined range of variation for the climate parameters.

In one or more embodiments, the method may further include determining, by the computing device, that the sensor of the plurality of sensors is accurate when the variation between the climate parameters determined from the output signals from the sensor and the virtual climate parameters lies within the determined range of variation for the climate parameters.

In one or more embodiments, the method may further include determining, by the computing device, that the sensor of the plurality of sensors is faulty when the variation between the climate parameters determined from the output signals from the sensor and the virtual climate parameters deviates from the determined range of variation for the climate parameters.

In one or more embodiments, the method may further include indicating, by the computing device, through an indication unit communicably coupled to it, the accuracy of operation of the plurality of sensors.

In one or more embodiments, to determine the range of variation for the climate parameters, the method may further include determining, by the computing device, through the learning engine, based on comparison of the climate parameters determined from the output signals from the plurality of sensors with the virtual climate parameters, a corresponding plurality of deviations for the climate parameters. The method may further include determining, by the computing device, through the learning engine, a mean value and standard deviation for the plurality of deviations. The method may further include determining, by the computing device, through the learning engine, the range of variation for the climate parameters by as being between an upper limit and a lower limit. The upper and lower limits may be determined as a difference of a function of the standard deviation from the mean value.

In one or more embodiments, the one or more historical climate parameters may include first and second parts. The first part may be different from the second part. The virtual model may be generated based on the first part. The range of variation for the climate parameters is determined based on the second part.

In one or more embodiments, the one or more historical climate parameters may include any or a combination of historical data from the plurality of sensors, and simulated data.

In one or more embodiments, the learning engine may include a wavelet neural network (WNN).

In one or more embodiments, the learning engine may be configured to determine the range of variation for the climate parameters by using an extended Kalman filter (EKF).

In one or more embodiments, the plurality of sensors may include air quality sensors. The climate parameters may include any one or a combination of relative humidity, temperature, level of carbon dioxide, and level of particulate matter.

Further disclosed herein is a system for evaluating accuracy of operation of sensors of a climate control unit in a premises. The system includes a plurality of sensors disposed at different locations in the premises, and configured to detect climate parameters relating to climate within the premises. The system further includes a computing device communicably coupled to the plurality of sensors. The computing device includes a processor and a memory. The memory stores instructions executable by the processor. The computing device is configured to receive, from the plurality of sensors, output signals indicative of a climate within the premises. The computing device is further configured to determine one or more climate parameters within the premises based on the received output signals. The computing device is further configured to receive, from a database communicably coupled to the computing device, one or more historical climate parameters within the premises. The computing device is further configured to generate, through a learning engine communicably coupled to the computing device, based on the historical climate parameters, a virtual model of the plurality of sensors. The virtual model is configured to generate one or more virtual climate parameters pertaining to the climate within the premises. The computing device is further configured to determine, through the learning engine, based on a comparison of the climate parameters and the virtual climate parameters, a range of variation for the climate parameters. The computing device is further configured to determine an accuracy of operation of a sensor of the plurality of sensors based on comparison of a variation between the climate parameters determined from the output signals from the sensor and the virtual climate parameters, with the determined range of variation for the climate parameters.

In one or more embodiments, the computing device may be configured to determine that the sensor of the plurality of sensors is accurate when the variation between the climate parameters determined from the output signals from the sensor and the virtual climate parameters lies within the determined range of variation for the climate parameters.

In one or more embodiments, the computing device may be configured to determine that the sensor of the plurality of sensors is faulty when the variation between the climate parameters determined from the output signals from the sensor and the virtual climate parameters deviates from the determined range of variation for the climate parameters.

In one or more embodiments, the computing device may be further configured to indicate, through an indication unit communicably coupled to the computing device, the accuracy of operation of the plurality of sensors.

In one or more embodiments, to determine the range of variation for the climate parameters, the learning engine may be configured to determine, based on comparison of the climate parameters determined from the output signals from the plurality of sensors with the virtual climate parameters, a corresponding plurality of deviations for the climate parameters. The learning engine may be further configured to determine a mean value and standard deviation for the plurality of deviations. The learning engine may be further configured to determine the range of variation for the climate parameters by as being between an upper limit and a lower limit. The upper and lower limits may be determined as a difference of a function of the standard deviation from the mean value.

In one or more embodiments, the one or more historical climate parameters may include first and second parts. The first part may be different from the second part. The virtual model may be generated based on the first part. The range of variation for the climate parameters may be determined based on the second part.

In one or more embodiments, the one or more historical climate parameters may include any or a combination of historical data from the plurality of sensors, and simulated data.

In one or more embodiments, the learning engine may include a wavelet neural network (WNN).

In one or more embodiments, the learning engine may be configured to determine the range of variation for the climate parameters by using an extended Kalman filter (EKF).

In one or more embodiments, the plurality of sensors may include air quality sensors. The climate parameters may include any one or a combination of relative humidity, temperature, level of carbon dioxide, and level of particulate matter.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included, by way of example only, to provide a further understanding of the subject disclosure of this invention and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 is a schematic representation of a system for evaluating accuracy of operation of sensors of a climate control unit in a premises;
FIG. 2 is a detailed schematic block diagram of a computing device of the system of FIG. 1;
FIG. 3 is a schematic flow diagram for a method for evaluating accuracy of operation of sensors of a climate control unit in a premises;
FIG. 4 is an exemplary schematic flow diagram for a process for evaluating accuracy of operation of sensors of a climate control unit in a premises; and
FIG. 5 is an exemplary schematic block diagram of a hardware system used for implementing the computing device of FIG. 2.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

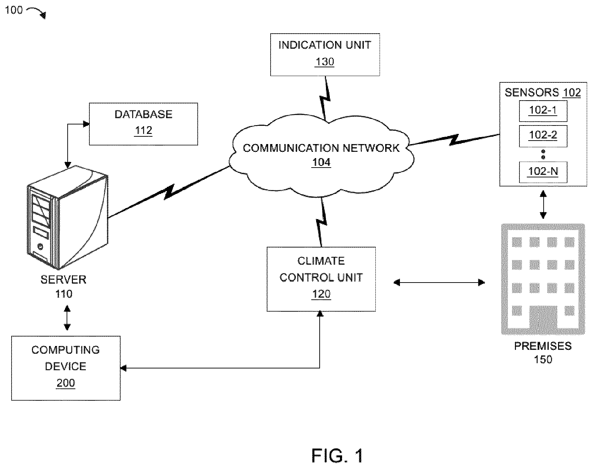

Referring to FIG. 1, a schematic representation of a system 100 for evaluating accuracy of operation of sensors of a climate control unit 120 in a premises 150 is shown. In some embodiments, the premises 150 may refer to any structure, such as a building, an outdoor venue, etc. In the illustrated embodiment, the premises 150 is a building. The building may be any, such as an office building, a residential building, public spaces, such as restaurants, malls, theaters, etc. A climate within the premises 150 may refer to a state of air within the premises. Specifically, the climate may refer to regulation and/or control of different parameters of the air, such as relative humidity, temperature, carbon dioxide content, particulate matter content, etc. within the premises. The climate control unit 120 is generally adapted to regulate and/or control the different parameters of the climate within the premises. The climate control unit 120 may be configured to operate various devices and/or apparatuses configured within the premises 150 that are configured to control a climate within the premises 150. The devices and/or apparatuses may include, without limitations, HVAC systems, thermal regulation systems, thermal control systems, illumination systems, fans and/or blowers, etc.

The system 100 may further include a plurality of sensors 102 disposed at various locations within the premises 150. The illustrated embodiment of FIG. 1 shows sensors 102-1, 102-2... 102-N. The sensors 102-1, 102-2... 102-N may be collectively interchangeably referred to as "the sensors 102". The sensors 102 may be configured to detect a climate parameters relating to climate within the premises 150. As the climate within the premises 150 may be dependent on optimal operation of the climate control unit 120, the sensors 102 may thus, indicate a state of operation of the climate control unit 120 within the premises 150. In one or more embodiments, the sensors 102 includes air quality sensors. The sensors 102 may be configured to measure or detect climate parameters pertaining to the climate within the premises 150. In one or more embodiments, the climate parameters may include any one or a combination of relative humidity, temperature, level of carbon dioxide, and level of particulate matter. In some embodiments, the sensors 102 may be communicably coupled to one another via a communication network 104.

In some embodiments, the communication network 104 may be a wireless communication network. The wireless communication network may be any wireless communication network capable of transferring data between entities of that network such as, without limitations, a carrier network including circuit switched network, a public switched network, a Content Delivery Network (CDN) network, a Long-Term Evolution (LTE) network, a Global System for Mobile Communications (GSM) network and a Universal Mobile Telecommunications System (UMTS) network, an Internet, intranets, local area networks, wide area networks, mobile communication networks, Bluetooth low energy (BLE) networks, and combinations thereof. Through the communication network 104, the sensors 102 may be configured to transmit signals to each other or to an external device.

In some embodiments, the communication network 104 may be a hardwired communication network. The hardwired communication network may be an optic cable, or a metallic cable provided in the structure of the premises 150 in which the sensors 102 are disposed.

The system 100 further includes a server 110. The sensors 102 may be communicably coupled to the server 110. In some embodiments, the server 110 may be a remote server. In some embodiments, the server 110 may be a cloud-based server. The server 110 may further be communicably coupled to a database 112 through the communication network 104. The database 112 may be configured within the server 110 or may be a cloud-based storage device.

The server 110 may be configured with a computing device 200. The computing device 200 may be configured for evaluating the state of operation of the climate control unit 120 in a premises 150. The computing device 200 may be implemented by way of a single device or a combination of multiple devices that may be communicably coupled or networked together. The computing device 200 may be implemented in hardware or a suitable combination of hardware and software. The computing device 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may include one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the computing device 200 for performing tasks such as data processing, input/output processing, feature extraction, and/or any other functions. Any reference to a task in the present disclosure may refer to an operation being or that may be performed on data.

The system 100 further includes an indication unit 130 configured to indicate information to related to operation of the sensors 102 and the climate control unit 120 within the premises 150. The indication unit 130 may include units, such as, without limitations, a display unit, an audio unit, a notification unit, an input unit, an output unit, electronic devices, and the like; however, the same are not shown in the FIG. 1, for the purpose of clarity. Also, in FIG. 1, only few units are shown; however, the computing device 200 may include multiple such units or the computing device 200 may include any such numbers of the units, obvious to a person skilled in the art or as required to implement the features of the present invention.

Conventionally, climate control units (e.g., the climate control unit 120) rely on information relayed through sensors (e.g., the sensors 102) to determine a current condition of climate at various locations within a premises. Based on deviation of current climate conditions from the preferred climate conditions, the climate control unit may operate the different climate control apparatuses to rectify or minimise the deviation. As a result, for the optimal functioning of the climate control unit, it is important that the sensors provide accurate information. Due to the vast number of sensors generally deployed in premises, particularly, large premises, it may be cumbersome and inefficient to individually check functioning of each of the sensors. However, a malfunction in even a single sensor may lead to inefficient or errant operation of the climate control unit, leading to increased costs of operation of the climate control unit.

Thus, there is a requirement for a means to determine operation of sensors accurately, and identify and notify at the earliest, any instance of a sensor malfunctioning or being faulty.

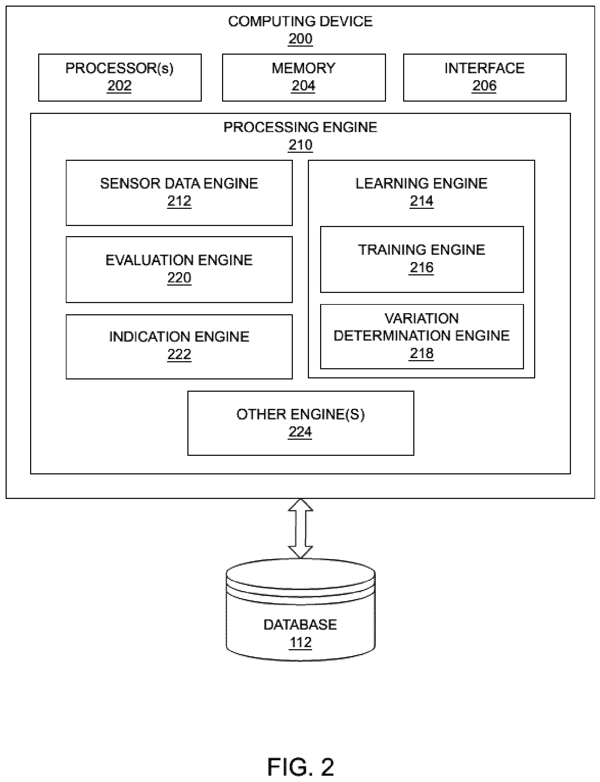

Referring to FIG. 2, a detailed schematic block diagram of the computing device 200, is shown. The computing device 200 includes a processor 202, and a memory 204 communicably coupled to the processor 202. The memory 204 may store instructions executable by the processor 202 to implement the computing device 200. The computing device 200 further includes an interface 206. The interface 206 may include a variety of interfaces, for example, interfaces for data input and output devices, referred to as I/O devices, storage devices, and the like. The interface 206 may also provide a communication pathway for one or more components of the computing device 200.

Referring now to FIGs. 1 and 2, the computing device 200 is communicably coupled to the database 112 (shown in FIG. 1). The database 112 may be configured to store data generated during execution of instructions by the processor 202 in order to implement the computing device 200. The database 112 may further be configured to store additional data required for implementing the computing device 200.

The computing device 200 includes a processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include a sensor data engine 212, a learning engine 214, an evaluation engine 220, an indication engine 222, and other engine(s) 226. The learning engine 214 may further include a training engine 216, and a variation determination engine 218. The other engine(s) 224 may include engines configured to perform one or more functions ancillary functions associated with the processing engine 210.

The sensor data engine 212 is configured to receive, from the sensors 102, output signals indicative of the climate within the premises 150. The output signals may include climate parameters pertaining to the climate within the premises 150. In one or more embodiments, the climate parameters may include any one or a combination of relative humidity, temperature, level of carbon dioxide, and level of particulate matter. In one or more embodiments, the sensor data engine 212 may be further configured to store the received output signals in the database 112. In one or more embodiments, the database 112 may have a record of a plurality of such received output signals over a plurality of time periods. Such a record may be collated to form a first dataset containing the plurality of output signals.

The learning engine 214 is configured to determine a reference range for the climate parameters. The climate parameters determined from the received output signals from the sensors 102 may be compared with the reference range to ascertain if the sensors 102 are functioning optimally. Functioning of the sensors 102 may be indicative of an overall state of operation of the climate control unit 120.

The training engine 216 is configured to receive, from the database 112, one or more historical climate parameters relating to climate within the premises. In one or more embodiments, the one or more historical climate parameters may include the stored climate parameters stored in the first dataset. The stored climate parameters may be determined from a plurality of output signals over a plurality of time periods. However, in some other embodiments, at least a portion of the historical climate parameters may be simulated data.

In one or more embodiments, the historical climate parameters includes first and second parts. The first and second parts may each include climate parameters determined from a plurality of output signals over a plurality of time periods; however, the first and second parts are different from one another. In one or more embodiments, the first part may be used to train the learning engine 214, and the second part may be used to determine the reference range.

The training engine 216 is configured to generate, based on the historical climate parameters, a virtual model of the sensors 102. The virtual model may be adapted to operate in a manner that is analogous or similar to how the sensors 102 operate. The virtual model may be configured to generate one or more virtual climate parameters indicative of the climate within the premises 150.

In one or more embodiments, the learning engine 214 may include a neural network. Specifically, the learning engine 214 may include a wavelet neural network (WNN). The WNN may be more specifically suited to model the sensors 102 as the WNN has a greater capacity to be modelled based on non-linearities inherent in the sensors 102. Furthermore, the training engine 216 may be trained using an extended Kalman filter (EKF) technique to enhance the accuracy of the virtual model.

The WNN includes an input layer, one or more hidden layers, and an output layer. In some embodiments, the WNN may include two hidden layers. A combination of Mexican hat wavelet function and logistic sigmoid may be utilized.

The variation determination engine 218 is configured to determine, based on a comparison of the climate parameters, and the virtual climate parameters, a range of variation for the climate parameters. In one or more embodiments, the variation determination engine 218 is configured to determine, based on comparison of the climate parameters determined from the output signals from the plurality of sensors 102 with the virtual climate parameters, a corresponding plurality of deviations for the climate parameters. The variation determination engine 218 is further configured to determine a mean value and standard deviation for the plurality of deviations. The variation determination engine 218 is further configured to determine the range of variation for the climate parameters by as being between an upper limit and a lower limit. In one or more embodiments, the upper and lower limits are determined as a difference of a function of the standard deviation from the mean value. In an example, the upper and lower limits may be one standard deviation above and below the mean value, respectively. The accuracy of operations of any sensor 102 may be determined by determining a variation between the climate parameters determined from the output signal received from the respective sensor 102 and the corresponding virtual climate parameters. The upper and lower limits may signify the range of values for the variation between the climate parameters and the virtual climate parameters indicative of optimal functioning of the sensors 102. In case, for any one or more sensors 102, the variation deviates from the range of variation, the respective one or more sensors 102 may be faulty.

The evaluation engine 220 is configured to determine an accuracy of operation of a sensor (e.g., the sensor 102-1) of the sensors 102 based on comparison of the variation between the climate parameters determined from the output signals from the sensor (102-1) and the virtual climate parameters, with the determined range of variation for the climate parameters.

In one or more embodiments, the evaluation engine 220 is configured to determine that the sensor is accurate when the variation between the climate parameters determined from the output signals from the sensor and the virtual climate parameters lies within the determined range of variation for the climate parameters.

In one or more embodiments, the evaluation engine 220 is configured to determine that the sensor is faulty when the variation between the climate parameters determined from the output signals from the sensor and the virtual climate parameters deviates from the determined range of variation for the climate parameters.

Further, in one or more embodiments, the evaluation engine 220 is configured to generate an alert in the event that any one or more of the sensors 102 is determined to be faulty. The alert may include an identity of the any one or more sensors 102, a value of the climate parameters indicated by the respective one or more sensors 102, and a deviation of the variation from the range of variation for the climate parameters.

The indication engine 222 is configured to indicate, through the indication unit 130, the accuracy of operation of the sensors 102. The indication engine 222 is further configured to indicate, through the indication unit 130, any generated alert pertaining to faulty states of any one or more sensors 102.

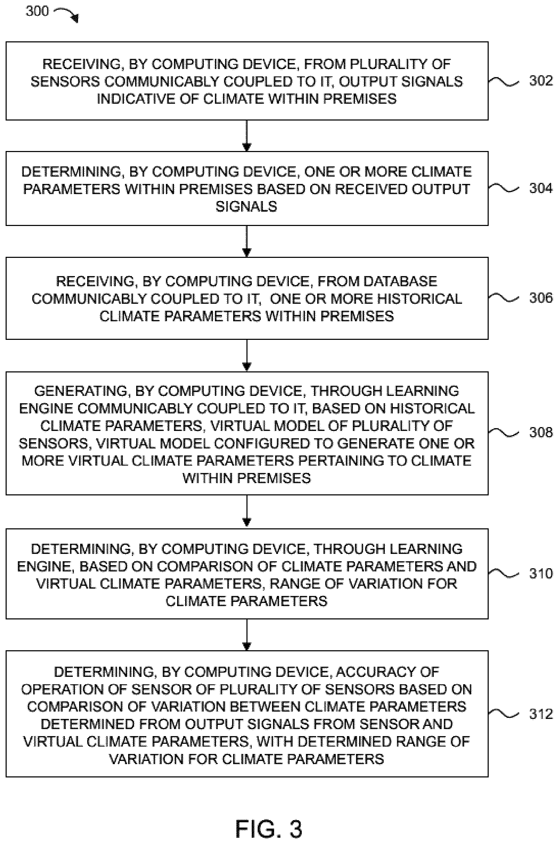

Referring to FIG. 3, a schematic flow diagram for a method 300 for evaluating accuracy of operation of sensors of the climate control unit 120 in the premises 150 is shown. Referring now to FIGs. 1 to 3, at step 302, the method 300 includes receiving, by the computing device 200, from the plurality of sensors 102 communicably coupled to it, output signals indicative of the climate within the premises 150. At step 304, the method 300 includes determining one or more climate parameters within the premises 150 based on the received output signals. At step 306, the method 300 further includes receiving, by the computing device 200, from the database 112 communicably coupled to it, one or more historical climate parameters within the premises 150. At step 308, the method 300 further includes generating, by the computing device 200, through the learning engine 214 communicably coupled to it, based on the historical climate parameters, the virtual model of the plurality of sensors 102. The virtual model is configured to generate one or more virtual climate parameters pertaining to the climate within the premises 150. At step 310, the method 300 further includes determining, by the computing device 200, through the learning engine 214, based on a comparison of the climate parameters and the virtual climate parameters, a range of variation for the climate parameters. At step 312, the method 300 further includes determining, by the computing device 200, an accuracy of operation of any the sensor of the plurality of sensors 102 based on comparison of the variation between the climate parameters determined from the output signals from the sensor and the virtual climate parameters, with the determined range of variation for the climate parameters.

In one or more embodiments, the method 300 further includes determining, by the computing device 200, that the sensor of the plurality of sensors 102 is accurate when the variation between the climate parameters determined from the output signals from the sensor and the virtual climate parameters lies within the determined range of variation for the climate parameters.

In one or more embodiments, the method 300 further includes determining, by the computing device 200, that the sensor of the plurality of sensors 102 is faulty when the variation between the climate parameters determined from the output signals from the sensor and the virtual climate parameters deviates from the determined range of variation for the climate parameters.

In one or more embodiments, the method 300 further includes indicating, by the computing device 200, through an indication unit 130 communicably coupled to it, the accuracy of operation of the plurality of sensors 102.

In one or more embodiments, to determine the range of variation for the climate parameters, the method 300 further includes determining, by the computing device 200, through the learning engine 214, based on comparison of the climate parameters determined from the output signals from the plurality of sensors with the virtual climate parameters, a corresponding plurality of deviations for the climate parameters. The method 300 further includes determining, by the computing device 200, through the learning engine 214, the mean value and standard deviation for the plurality of deviations. The method 300 further includes determining, by the computing device 200, through the learning engine 214, the range of variation for the climate parameters by as being between an upper limit and a lower limit. The upper and lower limits are determined as a difference of the function of the standard deviation from the mean value.

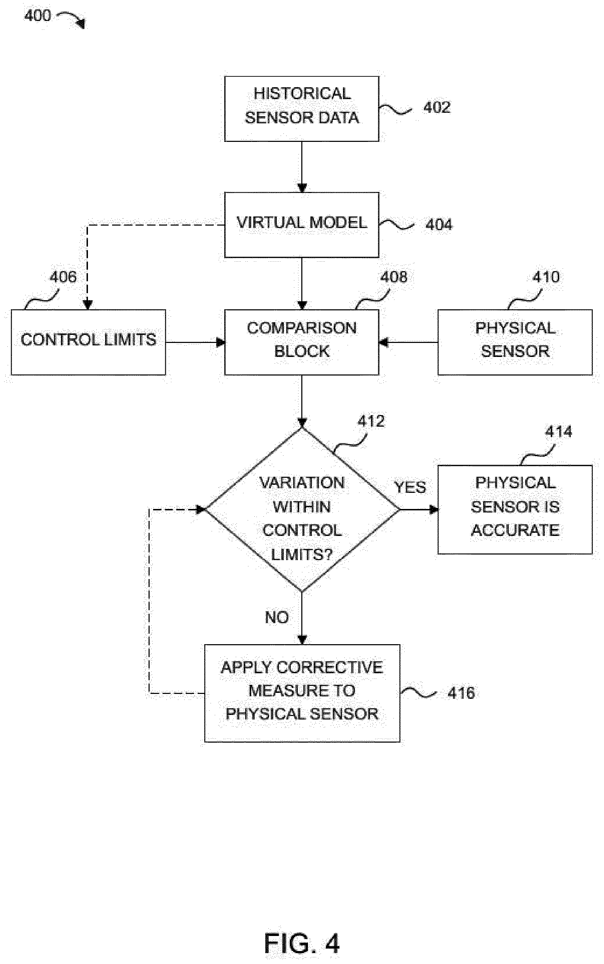

FIG. 4 is an exemplary an exemplary schematic flow diagram for a process 300 for evaluating accuracy of operation of sensors 102 of a climate control unit 120 in a premises 150. Historical sensor data 420 (which includes the one or more historical climate parameters) may be utilized to develop a virtual model 404. The virtual model may be configured to estimate the operation of the sensors 102, and generate values for the climate parameters. Further, the virtual model, based on the historical sensor data may further generate control limits 406. The control limits may include upper and lower limits. The control limits may be generated based on comparison of the historical sensor data and the sensor data generated by the virtual model. The variation between the two sets of data may be plotted, and a mean and standard deviation may be determined, based on which the upper and lower control limits may be ascertained.

Further, a control block 408 may be configured to receive sensor data from the virtual model, as well as from physical sensors. The control block may be configured to determine a variation between the sensor data received from the virtual model and the physical sensor. At step 410, it may be checked if the variation determined by the control block is within the control limits. If yes, at step 412, the physical sensor is deemed to be accurate. If the variation determined by the control block is outside the control limits, the sensor may not be accurate. At step 414, corrective action may be applied to the faulty sensor, until the faulty sensor operation is rectified.

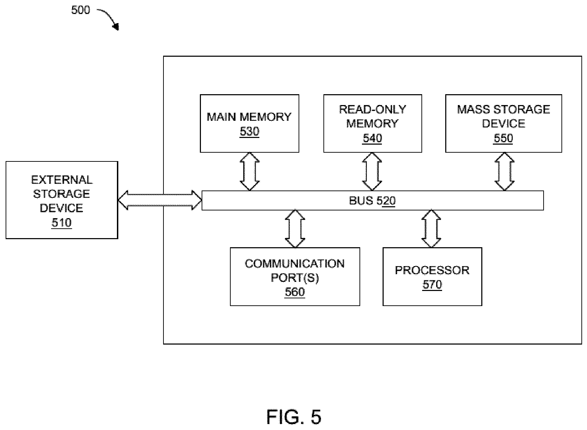

FIG. 5 is an exemplary schematic block diagram of a hardware system used for implementing the computing device 200. As shown in FIG. 5, a computer system 500 can include an external storage device 510, a bus 520, a main memory 530, a read only memory 540, a mass storage device 550, communication port 560, and a processor 570. A person skilled in the art will appreciate that the computer system may include more than one processor and communication ports. Examples of processor 570 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 570 may include various modules. Communication port 560 can be any of an RS-232 port for use with a modem-based dialup connection, a 10/100 Ethernet port, a Gigabit or 10 Gigabit port using copper or fibre, a serial port, a parallel port, or other existing or future ports. Communication port 560 may be chosen depending on a network, such a Local Area Network (LAN), Wide Area Network (WAN), or any network to which computer system connects. Memory 530 can be Random Access Memory (RAM), or any other dynamic storage device commonly known in the art. Read-only memory 540 can be any static storage device(s) e.g., but not limited to, a Programmable Read Only Memory (PROM) chips for storing static information e.g., start-up or BIOS instructions for processor 570. Mass storage 550 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 520 communicatively couples processor(s) 570 with the other memory, storage, and communication blocks. Bus 520 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 570 to software system.

Optionally, operator and administrative interfaces, e.g., a display, keyboard, and a cursor control device, may also be coupled to bus 520 to support direct operator interaction with a computer system. Other operator and administrative interfaces can be provided through network connections connected through communication port 560. The external storage device 510 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary computer system limit the scope of the present disclosure.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A method for evaluating an accuracy of operation of sensors of a climate control unit (120) in a premises (150), the method comprising:
receiving, by a computing device (200), from a plurality of sensors (102) communicably coupled to it, output signals indicative of a climate within the premises;
determining, by the computing device, one or more climate parameters within the premises based on the received output signals;
receiving, by the computing device, from a database (112) communicably coupled to it, one or more historical climate parameters within the premises;
generating, by the computing device, through a learning engine (214) communicably coupled to it, based on the historical climate parameters, a virtual model of the plurality of sensors, the virtual model configured to generate one or more virtual climate parameters pertaining to the climate within the premises;
determining, by the computing device, through the learning engine, based on a comparison of the climate parameters and the virtual climate parameters, a range of variation for the climate parameters; and
determining, by the computing device, an accuracy of operation of a sensor of the plurality of sensors based on comparison of a variation between the climate parameters determined from output signals from the sensor and the virtual climate parameters, with the determined range of variation for the climate parameters.

2. The method of claim 1, further comprising determining, by the computing device, that the sensor of the plurality of sensors is accurate when the variation between the climate parameters determined from the output signals from the sensor and the virtual climate lies within the determined range of variation for the climate parameters.

3. The method of claim 1 or 2, further comprising determining, by the computing device, that the sensor of the plurality of sensors is faulty when the variation between the climate parameters determined from the output signals from the sensor and the virtual climate parameters deviates from the determined range of variation for the climate parameters.

4. The method of any preceding claim, further comprising indicating, by the computing device, through an indication unit (130) communicably coupled to it, the accuracy of operation of the plurality of sensors.

5. The method of any preceding claim, wherein, to determine the range of variation for the climate parameters, the method further comprises:
determining, by the computing device, through the learning engine, based on comparison of the climate parameters determined from the output signals from the plurality of sensors with the virtual climate parameters, a corresponding plurality of deviations for the climate parameters;
determining, by the computing device, through the learning engine, a mean value and standard deviation for the plurality of deviations; and
determining, by the computing device, through the learning engine, the range of variation for the climate parameters by as being between an upper limit and a lower limit, wherein the upper and lower limits are determined as a difference of a function of the standard deviation from the mean value.

6. A system (100) for evaluating accuracy of operation of sensors (102) of a climate control unit (120) in a premises (150), the system comprising:
a plurality of sensors (102) disposed at different locations in the premises, and configured to detect climate parameters relating to the climate within the premises; and
a computing device (200) communicably coupled to the plurality of sensors, the computing device comprising a processor (202) and a memory (204), the memory storing instructions executable by the processor, the computing device configured to:
receive, from the plurality of sensors, output signals indicative of a climate within the premises;
determine one or more climate parameters within the premises based on the received output signals;
receive, from a database communicably coupled to the computing device, one or more historical climate parameters within the premises;
generate, through a learning engine (214) communicably coupled to the computing device, based on the historical climate parameters, a virtual model of the plurality of sensors, the virtual model configured to generate one or more virtual climate parameters pertaining to the climate within the premises;
determine, through the learning engine, based on a comparison of the climate parameters and the virtual climate parameters, a range of variation for the climate parameters; and
determine an accuracy of operation of a sensor of the plurality of sensors based on comparison of a variation between the climate parameters determined from the output signals from the sensor and the virtual climate parameters, with the determined range of variation for the climate parameters.

7. The system of claim 6, wherein the computing device is configured to determine that the sensor of the plurality of sensors is accurate when the variation between the climate parameters determined from the output signals from the sensor and the virtual climate parameters lies within the determined range of variation for the climate parameters.

8. The system of claim 6 or 7, wherein the computing device is configured to determine that the sensor of the plurality of sensors is faulty when the variation between the climate parameters determined from the output signals from the sensor and the virtual climate parameters deviates from the determined range of variation for the climate parameters.

9. The system of any of claims 6 to 8, wherein the computing device is further configured to indicate, through an indication unit (130) communicably coupled to the computing device, the accuracy of operation of the plurality of sensors.

10. The system of any of claims 6 to 9, wherein, to determine the range of variation for the climate parameters, the learning engine is configured to:
determine, based on comparison of the climate parameters determined from the output signals from the plurality of sensors with the virtual climate parameter, a corresponding plurality of deviations for the climate parameters;
determine a mean value and standard deviation for the plurality of deviations; and
determine the range of variation for the climate parameters by as being between an upper limit and a lower limit, wherein the upper and lower limits are determined as a difference of a function of the standard deviation from the mean value.

11. The method or the system of any preceding claim, wherein the one or more historical climate parameters comprises first and second parts, the first part different from the second part, wherein the virtual model is generated based on the first part, and wherein the range of variation for the climate parameters is determined based on the second part.

12. The method or the system of any preceding claim, wherein the one or more historical climate parameters comprises any or a combination of historical data from the plurality of sensors, and simulated data.

13. The method or the system of any preceding claim, wherein the learning engine comprises a wavelet neural network (WNN).

14. The method or the system of any preceding claim, wherein the learning engine is configured to determine the range of variation for the climate parameters by using an extended Kalman filter (EKF).

15. The method or the system of any preceding claim, wherein the plurality of sensors comprises air quality sensors, and the climate parameters comprise any one or a combination of relative humidity, temperature, level of carbon dioxide, and level of particulate matter.
